# EUROPÄISCHE PATENTANMELDUNG

(11) **EP 0 802 512 A2**
(43) Veröffentlichungstag der Anmeldung: **22.10.1997**
(21) Anmeldenummer: 96119054.3
(22) Anmeldetag: 28.11.1996
(51) Int. Cl.: G07F 7/08

(54) **Verfahren und Vorrichtung zur Zahlung aus Chipkarten mit Börsenfunktion**

(30) Priorität: 18.04.1996 DE 19615303
(71) Anmelder: Deutsche Telekom AG, 53113 Bonn (DE)
(72) Erfinder: Schaefer-Lorinser, Frank, Dr.rer.nat, 64372 Ober-Ramstadt (DE)

(57) **Zusammenfassung**

Ein Problem bei Zahlungen aus Chipkarten ist es, die Sicherheit der Abrechnung zwischen den Systembetreibern und den Kartenherausgebern für die vielseitigen Anwendungen zu gewährleisten. die mit einfacher Aufsummierung im Zusammenwirken mit den Sicherheitmoduln nicht ausreicht.

Dieses Problem wird mittels eines weiteren lösch- bzw. überschreibbaren Registers in den Chipkarten gelöst, das die dynamischen Änderungen des Zählers seit der letzten Authentifikation mit in die aktuelle Authentifikation übernimmt und danach jeweils gelöscht wird.

Die Erfindung ist bei allen Arten von Zahlungsvorgängen mittels Chipkarten anwendbar und insbesondere, bei fehlender Identität von den Systembetreibern und den Kartenherausgebern.

## Beschreibung

Die Erfindung bezieht sich auf ein Verfahren der im Oberbegriff des Patentanspruchs 1 näher definierten Art und auf eine Vorrichtung der im Oberbegriff des Patentanspruchs 5 aufgeführten Art. Derartige Lösungen sind z. B. aus ETSI D/EN/TE 090114, Terminal Equipment (TE) Requirements for IC cards and terminals for telecommunication use, Part 4 - Patent methods Version 4 v. 07. Febr. 1992 und der Europäischen Patentanmeldung 0 605 070 bekannt.

Telefonkarten mit definiertem Anfangsguthaben sind als Zahlungsmittel für Kartentelefone auf dem Markt. Zukünftig gewinnen "elektronische Geldbörsen" nach dem gleichen Prinzip als Zahlungsmittel für begrenzte Beträge zunehmende Bedeutung. Für den Anwendungsfall "Bezahlen mit der Chipkarte" ist ein entsprechendes Kartenlesermodul mit einem Sicherheitsmodul SM zur Karten- und Guthabenprüfung in den Automaten gekoppelt. Bei den für begrenzte Beträge eingesetzten Chipkartenterminals erfolgt die Sicherheitsfunktion dadurch, daß das komplette Gerät gegen Angriffe von außen geschützt wird.

Aus der EP 0 605 070 A2 ist auch ein Verfahren zum Transferieren von Buchgeldbeträgen auf und von Chipkarten bekannt, bei dem überschreibbare Speicherplätze einer Chipkarte aufgeteilt werden in wenigstens zwei Speicherplätze, von denen einer als "debitorisch", also "elektronische Geldbörse" genutzt wird, so wie die Telefonyarten, und der andere "kreditorisch" im Sinne einer Kreditkarte. Unter den für Kreditkarten üblichen gesicherten Bedingungen ist es vorgesehen, Geldbeträge zwischen den Bereichen zu transferieren, um die "elektronische Geldbörse" wieder aufzufüllen.

Bei den für elektronische Zahlungsanwendungen im bargeldlosen Kleingeldverkehr verwendeten digitalen Geldbörsen ist der Geldbetrag durch einen Zähler repräsentiert. Im allgemeinen gibt es einen Kartenherausgeber, der gegen Bezahlung eines bestimmten Geldbetrages entweder Einweg-Karten verkauft oder auf einer mehrmals verwendbaren Karte den dafür vorgesehenen Zähler erhöht. Solche Karten sind oft als Chipkarten ausgeführt und werden auch als Wertkarten bezeichnet.

Ein Systembetreiber, der in einem System die Wertkarten eines Kartenherausgebers akzeptiert, kann zum Beispiel für eine gesicherte Abrechnung Sicherheitsmodule verwenden, die einen dem speziellen Kartenherausgeber zugeordneten Zähler führen. Dieser Zähler wird bei jedem Abbuchungsvorgang aus einer Wertkarte des Kartenherausgebers an dem Terminal des Systembetreibers entsprechend der Abbuchung erhöht. Dieser Gesamtsummenzähler für alle Abbuchung der Karten dieses Herausgebers liefert dann eine Grundlage für die Abrechnung zwischen Systembetreiber und Kartenherausgeber.

Aufgabe der Erfindung ist es, die Sicherheit der Abrechnung zwischen den Systembetreibern und den Kartenherausgebern für die vielseitigen Anwendungen zu erhöhen.

Diese Aufgabe löst ein Verfahren entsprechend dem Kennzeichen des Patentanspruchs 1.

Vorteilhafte Aus- bzw. Weiterbildungsmöglichkeiten dieses Verfahrens sind in den Kennzeichen der Unteransprüche 2 -3 aufgeführt.

Im Kennzeichen des Patentanspruchs 4 ist eine für die Anwendung des erwähnten Verfahrens geeignete Vorrichtung beschrieben.

Die Erfindung ist mit ihren Wirkungen, Vorteilen und Anwendungsmöglichkeiten in den nachfolgenden Ausführungsbeispielen näher beschrieben.

Für die Transaktion zwischen der Wertkarte und dem die Summenzähler führenden Sicherheitsmodul ist folgende Eigenschaft für eine gesicherte Abrechnung wesentlich. In die Transaktion zwischen Wertkarte und Sicherheitsmodul sollte nicht nur der statische Zustand des Zählers der Wertkarte eingehen, sondern auch auf gesicherte Art und Weise der konkrete Abbuchungsbetrag.

Um bei mehreren Sicherheitsmodulen und mehreren Chipkarten, die in beliebiger Reihenfolge an beliebigen Sicherheitsmodulen verwendet werden können, sicher zu stellen, daß die gesamten Summenzähler aller Sicherheitsmodule auch genau nur die von den Karten abgebuchten Beträge enthalten, ist ein einziges Kryptogramm über den Zählerstand nicht sicher genug um Falschbuchungen und Angriffe sicher zu vermeiden.

Für die Übertragung und Verknüpfung der Zählerstände können keyed hash functionen mit nachgeschalteter ausreichend sicherer Kryptofunktion verwendet werden.

## Patentansprüche

1. Verfahren zur Zahlung aus Chipkarten mit Börsenfunktion, bei dem der Kartennutzer über ein begrenztes gespeichertes Guthaben bei Zahl- bzw. Auszahlvorgängen in Kassenautomaten mit vereinfachter Prozedur verfügen kann und bei dem die Zahlungsvorgänge jeweils als Geldbetrag aus der Chipkarte des Kartennutzers mit Hilfe einer Sicherheitsfunktion abgebucht und der Geldbetrag mit einer Sicherheitsfunktion einem Summenzähler für Geldbeträge im Sicherheitsmodul eingetragen und der Zählerstand nach den Kassiervorgängen an eine Abrechnungszentrale übergeben wird, **dadurch gekennzeichnet**, daß die dynamischen Änderungen des Zählers der Wertkarte seit der letzten Authentifikation mit in die aktuelle Authentifikation der Wertkarte gegenüber dem Sicherheitsmodul eingegeben und bei dem Kryptogramm der nächsten Authentifikation in Abhängigkeit von diesem veränderten Zählerstand berechnet und der vorhergehende Zählerstand nach jeder Authentifikation gelöscht wird.

2. Verfahren nach Patentanspruch 1, dadurch gekennzeichnet, daß der vorhergehende Zählerstand, in dem die Änderungen des Zählers gespeichert wird, auch bei jedem Reset der Karte gelöscht wird.

3. Verfahren nach Patentanspruch 1 und 2, dadurch gekennzeichnet, daß mit dem vorhergehenden Zählerstand, der die Änderungen des Zählers auf der Karte seit der letzten Authentifikation enthält, genau der Wert der Differenz zwischen dem Zählerstand zum Zeitpunkt der letzten Authentifikation und dem aktuellen Zählerstand dokumentiert wird.

4. Vorrichtung zur Zahlung aus Chipkarten mit Börsenfunktion, die ein den Zählerstand führendes Register und Eintragungen zur Authentifikation gegenüber einem Sicherheitsmodul enthält, **dadurch gekennzeichnet**, daß dem den Zählerstand führenden Register ein weiteres Register zugeordnet ist, welches mit Neueintragungen löschbar bzw. überschreibbar ist und alle nach einer Authentifikation durchgeführten Änderungen des Zählers aufzeichnet und mit in die nächste Authentifikation überträgt.
